# EUROPÄISCHE PATENTSCHRIFT

(11) **EP 3 744 522 B1**
(45) Veröffentlichungstag und Bekanntmachung des Hinweises auf die Patenterteilung: **10.07.2024**
(21) Anmeldenummer: 20173654.3
(22) Anmeldetag: 08.05.2020
(51) Int. Cl.: B41F 31/02, B41F 33/16, B41F 35/00, B41J 11/00

(54) **LACKVERBRAUCHS-VORHERSAGE**
PAINT CONSUMPTION PREDICTION
PRÉDICTION D'UNE CONSOMMATION DE PEINTURE

(30) Priorität: 28.05.2019 DE 102019207839
(43) Veröffentlichungstag der Anmeldung: 02.12.2020
(73) Patentinhaber: Heidelberger Druckmaschinen AG, 69115 Heidelberg (DE)
(72) Erfinder: Neeb, Steffen, 64625 Bensheim (DE); Norrick, Nicklas, 68542 Heddesheim (DE); Henn, Andreas, 69151 Neckargemünd (DE)

(56) Entgegenhaltungen:
- EP-A1- 1 127 688
- EP-A1- 2 743 870
- EP-A1- 3 608 104
- WO-A1-2019/057342
- DE-A1- 102005 058 768
- DE-A1- 102014 116 089
- DE-A1- 102017 205 576
- DE-A1- 19 928 200

## Beschreibung

Die vorliegende Erfindung beschäftigt sich mit einem Verfahren zum Betrieb einer Bedruckstoffe verarbeitenden Maschine mittels Anwendung eines Verbrauchs-Prädiktionsmodells.

Die Erfindung liegt im technischen Gebiet der vorausschauenden Wartung.

Allgemein basieren Ansätze zur vorausschauenden Wartung von industriellen Druckmaschinen wesentlich auf den Daten, die von den einzelnen Druckmaschinen im Feld erzeugt und gesammelt werden, damit diese im Anschluss einer zentralen Auswertung unterzogen werden können. Bei diesen sogenannten Big-Data-Anwendungen ist die Bestrebung möglichst viele Sensoren und Veränderungen an einer Druckmaschine zu erfassen und auszuwerten.

Im Speziellen ist es zudem oft ein Problem beim Betrieb von Lackwerken in Druckmaschinen den Lackverbrauch zu ermitteln bzw. vorherzusagen, da der Lackverbrauch meist nicht unmittelbar per Sensor gemessen wird.

Technisch wichtig ist die Lackverbrauchsbestimmung jedoch um z.B. Leckagen zu ermitteln, eine Pumpenüberwachung durchführen zu können und für die Optimierung von Wasch-Zyklen und Lackwechsel in der Maschine, um Eintrocknung und Ansammlung von Lackresten zu vermeiden.

Aus der deutschen Patentanmeldung DE 10 2015 223 032 A1 ist dabei ein Verfahren zur Detektion von Tintenleckage während eines Druckprozesses in einer Inkjet-Druckmaschine mit einem Workflowsystem auf einem Rechner zur Kontrolle des Druckauftrages, einer Tintenversorgungseinheit für die Druckmaschine mit einem Tintentank mit Füllstandssensor und einem Steuerungsrechner mit einer Software zur Ansteuerung der Tintenversorgungseinheit, wobei die Tintenversorgungseinheit in der Lage ist unterschiedlich große Tintentropfen zu erzeugen. Das Verfahren umfasst die folgenden Schritte der Berechnung einer theoretisch verbrauchten Tintenmenge aus den Druckdaten der Vorstufe durch Aufsummieren der Tropfenvolumina durch das Workflowsystem, des Sendens der theoretisch verbrauchten Tintenmenge an die Software zur Ansteuerung der Tintenversorgung durch das Workflowsystem, der Ermittlung einer real verbrauchten Tintenmenge durch Analyse des Füllstandssensors des Tintentanks, des Abgleichs der theoretisch verbrauchten Tintenmenge mit der ermittelten realen verbrauchten Tintenmenge und des Anzeigens eines Leckagealarms, wenn die real verbrauchte Tintenmenge höher als die theoretisch verbrauchte Tintenmenge ist. Hier wird jedoch die Anwesenheit eines Füllstandssensors benötigt, welcher in Lackwerken ja gerade nicht vorhanden ist. Zudem offenbart die Anmeldung nichts über Big-Data-Anwendungen und eine entsprechende Auswertung dieser Daten.

Die deutschen Patentanmeldung DE 10 2015 101 370 A1 offenbart hierfür ein Big-Data-Netzwerk oder -System für ein Prozesssteuerungssystem oder eine Prozesssteuerungsanlage beinhaltet ein Datenspeichergerät, das konfiguriert ist, um Prozesssteuerungsdaten von Steuerungssystemgeräten zu empfangen und die Prozesssteuerungsdaten zu speichern. Das Big-Data-Netzwerk oder -System identifiziert verschiedene Parameter oder Attribute von den Prozesssteuerungsdaten und erzeugt und verwendet Zeilenschlüssel, um die Parameter gemäß verschiedenen Kombinationen, wie Kombinationen unter Verwendung von Zeitstempeln, zu speichern. Das Big-Data-Netzwerk oder -System kann außerdem bestimmte kombinierte Datenanalysen speichern, die mit durch die Zeitstempel festgelegten Zeiträumen verknüpft sind. Dementsprechend speichert das Big-Data-Netzwerk oder -System effektiv Echtzeitdaten, die Maße in einem Datenbankschema aufweisen, und Benutzer oder Administratoren können die kombinierten Daten wirksam einsetzen, um bestimmte mit den bestimmten Zeiträumen verknüpfte Daten zu analysieren. Allerdings offenbart diese Anmeldung nichts über die Anwendung des Big-Data-Netzwerkes hinsichtlich des Betriebs von Lackwerken in Druckmaschinen und offenbart an dieser Stelle somit keinen Erkenntnisgewinn.

Des Weiteren offenbart die deutsche Patentanmeldung DE 10 2014 217 775 A1 ein Verfahren zur Bestimmung einer Gesamtmenge eines während zumindest eines Druckvorgangs anfallenden Verbrauchs zumindest eines Beschichtungsmittels, wobei aus Vorlagebilddaten Rasterdaten erzeugt werden und wobei die Gesamtmenge ausschließlich aus von den Vorlagebilddaten abgeleiteten Daten berechnet wird und wobei in dem Druckvorgang einzelne Bildelemente durch einzeln aufzutragende Tropfen des zumindest einen Beschichtungsmittels zu erzeugen sind und wobei die Rasterdaten für jedes Bildelement einen Eintrag mit einem Wert von mehreren möglichen Werten aufweisen, der eine jeweilige Tropfengröße und somit eine jeweilige Einzelmenge an Beschichtungsmittel des dem jeweiligen Bildelement entsprechenden Tropfens festlegt und wobei von den mehreren möglichen Werten zumindest zwei verschiedene Werte zwei unterschiedlichen, jeweils von Null verschiedenen Tropfengrößen zugeordnet sind und wobei die Gesamtmenge einer Summe aus allen jeweiligen in den Rasterdaten festgelegten Einzelmengen der den jeweiligen Bildelementen entsprechenden Tropfen des zumindest einen Beschichtungsmittels entspricht. Dieses Verfahren ist bereits deutlich hilfreicher, hat jedoch noch deutliche Nachteile. So ist das Berechnungsverfahren für die Verbrauchsvorhersage ziemlich spezifisch auf Beschichtungsmittel für Drucksubstrat eines Inkjet-Druckprozesses zugeschnitten, wobei das Beschichtungsmittel zwar auch als Lack bezeichnet wird, damit jedoch vor allem die Vorbehandlung des Subtrats vor dem Inkjet-Druck gemeint ist. Eine klassische Lackveredelung nach dem Druck wird damit nicht erfasst. Zudem offenbart auch diese Anmeldung nicht über die Anwendung und die spezifischen Vorteile des Einsatzes von Big-Data-Anwendungen.

DE 10 2005 058 768 A1 beschreibt ein Verfahren zum Betreiben einer Druckmaschine, in dem während des Druckbetriebs der Füllstand von Druckflüssigkeiten wie Lack oder Druckfarbe gemessen und unter Berücksichtigung der erfassten Zahl der bedruckten Druckexemplare die verbrauchte Menge an Druckflüssigkeit ermittelt wird.

DE 199 28 200 A1 beschreibt ein Verfahren zur Steuerung des Farbniveaus im Farbkasten einer Bogenoffsetdruckmaschine, in dem Vorhersagen über den laufenden Farbbedarf getroffen werden, wobei vor Beginn des Druckauftrages der farbzonenspezifische Farbbedarf ermittelt wird.

WO 2019/057342 A1 beschreibt eine Druckmaschine mit einer Druckfarbenquelle, die zwei Kammern mit unterschiedlichen Druckfarben umfasst, welche aufgrund von ermittelten Messwerten in unterschiedlichen Mengenverhältnissen gemischt und an das Druckwerk übertragen werden.

Die Aufgabe der vorliegenden Erfindung besteht somit darin, ein Verfahren zu offenbaren, welches den Betrieb einer Bedruckstoffe verarbeitenden Maschine im Hinblick auf Bereitstellung und Einsatz von Verbrauchsmaterialien verbessert.

Gelöst wird diese Aufgabe durch ein Verfahren zum Betrieb einer Bedruckstoffe verarbeitenden Maschine durch einen Rechner, welches die Verfahrensschritte Erfassung von Druckauftragsparametern von Druckaufträgen für die Bedruckstoffe verarbeitende Maschine und von Maschinenparametern durch den Rechner, Auswertung der erfassten Parameter zur Ermittlung des Maschinenzustandes durch den Rechner, Anforderung und Bereitstellung von fluiden Verbrauchsmaterialien zur Optimierung des Betriebs der Maschine auf Basis des ermittelten Maschinenzustandes durch den Rechner und Durchführen von auf Basis des ermittelten Maschinenzustandes optimierten Wartungsmaßnahmen durch den Rechner, umfasst. Kern des erfindungsgemäßen Verfahrens ist dabei die Auswertung der erfassten Parameter zur Ermittlung des Maschinenzustandes. Unter dem Maschinenzustand ist hier vor allem der aktuelle Zustand der Maschine hinsichtlich der Verbrauchsmaterialien zu verstehen. Auf Basis dieses zu ermittelnden Maschinenzustandes, sprich der Versorgungssituation der Maschine mit Verbrauchsmaterialien, werden dann entsprechend neue Verbrauchsmaterialien angefordert und bereitgestellt. Dies geschieht so, dass der Betrieb der Maschine in keinster Weise eingeschränkt wird, wie es z.B. der Fall wäre, falls bestimmte fluide Verbrauchsmaterialien kurzfristig nicht zur Verfügung stehen würden. Andererseits kann auch eine Überversorgung mit Verbrauchsmaterialien durchaus ein Problem darstellen und auch dieses wird durch die erfindungsgemäße Auswertung und darauf basierende Ermittlung des Maschinenzustandes bzw. Anforderung und Bereitstellung von fluiden Verbrauchsmaterialien vermieden. Abhängig vom entsprechend ermittelten Maschinenzustand lassen sich zudem auch optimierte Wartungsmaßnahmen durchführen, welche ebenfalls den Betrieb der Maschine verbessern. Dies betrifft z.B. den Zeitpunkt der Durchführung von Wartungsmaßnahmen, aber auch die Art der Wartungsmaßnahme, d.h. welche Wartungsmaßnahme überhaupt zu welchem Zeitpunkt durchgeführt werden muss. Im Gegensatz zu aus dem Stand der Technik bekannten Verfahren werden dabei hier die erfassten Parameter, welche Ausgangspunkt des gesamten erfindungsgemäßen Verfahrens sind, nicht primär durch Sensoren erfasst, sondern lediglich durch Erfassung von Druckauftragsparametern und Maschinenparametern durchgeführt. Insbesondere die Verbrauchsdaten der betreffenden Maschine werden nicht direkt gemessen.

Vorteilhafte und daher bevorzugte Weiterbildungen des Verfahrens ergeben sich aus den zugehörigen Unteransprüchen sowie aus der Beschreibung mit den zugehörigen Zeichnungen.

Erfindungsgemäß ist dabei, dass der Rechner zur Anforderung und Bereitstellung von fluiden Verbrauchsmaterialien auf Basis des ermittelten Maschinenzustandes eine Verbrauchsvorhersage der fluiden Verbrauchsmaterialien mittels eines Regressionsmodells durchführt. Der Rechner führt dabei die Verbrauchsvorhersage durch Anwendung des Regressionsmodells dergestalt durch, dass er mittels der erfassten Druckauftrags- und Maschinenparameter zum einen den aktuellen Maschinenzustand, insbesondere hinsichtlich des Status der Verbrauchsmaterialien, durchführt und gleichzeitig aus diesen Daten mittels des Regressionsmodells die Verbrauchsvorhersage für die fluiden Verbrauchsmaterialien erstellt.

Erfindungsgemäß ist dabei, dass der Rechner für das Regressionsmodell zur Verbrauchsvorhersage der fluiden Verbrauchsmaterialien ein lineares Regressionsmodell oder ein selbstlernendes Modell, insbesondere mit einer SVM, verwendet. Welcher der beiden Ansätze hier besser geeignet ist, hängt zum einen von den Fähigkeiten und Möglichkeiten des entsprechenden Software-Entwicklers, welcher das rechnergestützte Verfahren in die Software zu implementieren hat, ab, zum anderen von Art und Menge der zur Verfügung stehenden Daten. Je mehr Daten hinsichtlich der erfassten Druckauftrags- und Maschinenparameter zur Verfügung stehen, desto eher empfiehlt sich die Anwendung eines selbstlernenden Algorithmus', z.B. in Form einer Support Vector Machine (SVM) oder einem künstlichen neuronalen Netz, da diese umso besser und effizienter arbeitet, je mehr Daten zum Einlernen zur Verfügung stehen.

Erfindungsgemäß ist dabei, dass es sich bei den fluiden Verbrauchsmaterialien um Lack für ein Lackwerk, Farbe für ein Druckwerk oder Feuchtmittel für ein Feuchtwerk der Bedruckstoffe verarbeitenden Maschine handelt. In allererster Linie handelt es sich dabei bei den fluiden Verbrauchsmaterialien um Lack für ein Lackwerk. Dies ist deshalb der Fall, da der Lack für das Lackwerk in einzelnen Lackgebinden zum Lackwerk transportiert wird und im Lackwerk üblicherweise nicht durch Füllstandssensoren getrackt wird. Daher ist für die Verbrauchsüberwachung des Lacks immer nur ein sehr grobmaschiges System verfügbar, da im praktischen Einsatz stets ein neues Lackgebinde geordert wird, wenn der Lack im Lackwerk für den Drucker sichtbar sich dem Ende zuneigt. Das erfindungsgemäße Verfahren ermöglicht hier also eine deutliche Verbesserung der Verbrauchssteuerung, indem durch den Einsatz der Verbrauchsvorhersage dem Drucker wesentlich genauer ersichtlich ist, wie sich der Verbrauch des Lacks über den Betrieb der Bedruckstoffe verarbeitenden Maschine entwickeln wird und somit ein optimierter Betrieb der Maschine hinsichtlich Anforderung und Bereitstellung neuer Lackgebinde sowie davon abhängiger optimierter Wartungsmaßnahmen ermöglicht wird. Dennoch ist der Ansatz des erfindungsgemäßen Verfahrens erfindungsgemäß natürlich auch für andere fluide Verbrauchsmaterialien wie Farbe für ein Druckwerk oder Feuchtmittel für ein Feuchtwerk der Bedruckstoffe verarbeitenden Maschine möglich.

Eine bevorzugte Weiterbildung des erfindungsgemäßen Verfahrens ist dabei, dass es sich bei den Druckauftrags- und Maschinenparametern um Parameter wie die Flächendeckung des Druckauftrages, die entsprechende Druckzeit, die Auflagenlänge, die Temperatur in der Bedruckstoffe verarbeitenden Maschine oder den verwendeten Rasterwalzentyp handelt. Dies sind die wichtigsten Druckauftrags- und Maschinenparameter, welche vom Rechner zur Ermittlung des Maschinenzustandes ausgewertet werden, bzw. Eingang in das Regressionsmodell finden. Die Auflistung ist jedoch nicht vollständig. Es kann durchaus sinnvoll sein, weitere Parameter mit einzubeziehen. Insbesondere bei Einsatz eines selbstlernenden Algorithmus bzw. Regressionsmodells gilt der Grundsatz, dass je mehr Daten zur Verfügung stehen, desto genauer wird die vom selbstlernenden Regressionsmodell erstellte Verbrauchsvorhersage und desto effizienter wird der Betrieb der Bedruckstoffe verarbeitenden Maschine sein.

Eine weitere bevorzugte Weiterbildung des erfindungsgemäßen Verfahrens ist dabei, dass die optimierten Wartungsmaßnahmen die Durchführung von Waschzyklen und Lack-, bzw. Farbwechsel in der Maschine umfasst, um Eintrocknung und Ansammlung von Lack- oder Farbresten zu vermeiden. Dies ist insbesondere für die fluiden Verbrauchsmaterialien von Lack und Farbe von Bedeutung. Insbesondere eintrocknender Lack im Lackwerk könnte andernfalls ein großes Problem für den Betrieb der Bedruckstoffe verarbeitenden Maschine darstellen.

Eine weitere bevorzugte Weiterbildung des erfindungsgemäßen Verfahrens ist dabei, dass die Ermittlung des Maschinenzustandes durch den Rechner auch die Untersuchung auf eine mögliche Leckage, sowie eine Pumpenüberwachung umfasst. Dies bietet sich an, da, gesetzt den Fall, dass die Verbrauchsvorhersage korrekt arbeitet, ein in der Praxis wesentlich höherer Verbrauch an einer Bedruckstoffe verarbeitenden Maschine gegenüber dem vorhergesagten Verbrauch anzeigt, dass irgendwo in der Maschine keine Leckage vorhanden sein muss. Dies gilt ebenfalls für eine Überwachung der entsprechenden Pumpen für die fluiden Verbrauchsmaterialien.

Das erfindungsgemäße Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen. Die Zeichnungen zeigen:
- Figur 1: ein beispielhaftes Ergebnis einer Verbrauchsvorhersage in Form des Zeitraums eines Wechsels der Gebinde abhängig von der Temperatur
- Figur 2: ein beispielhaftes Ergebnis einer Verbrauchsvorhersage in Form des Verbrauchs in Liter abhängig von der Temperatur
- Figur 3: den schematischen Aufbau des logistischen Systems zwischen Druckmaschine und Lager

Die Erfindung sieht vor, das zum einen Daten aus der Druckvorstufe über die jeweiligen Druckjobparameter und zum anderen Daten aus der Lagerhaltung über die Entnahme der fluiden Verbrauchsmaterialen, vor allem Lack, aber auch Farbe oder Feuchtmittel, verarbeitet werden, mit dem Ziel ein genaues Verbrauchsmodell zu erzeugen.

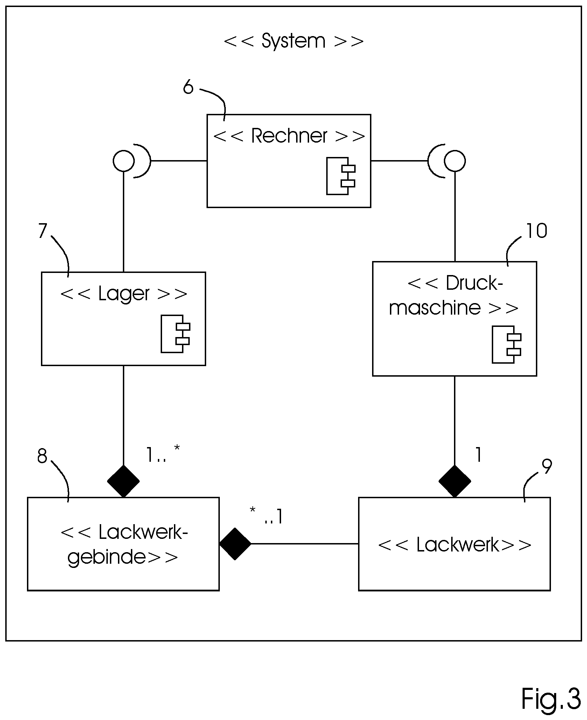

Figur 3 zeigt schematisch den Aufbau des logistischen Systems zwischen Druckmaschine 10 und Lager 7. Ein Rechner 6, welcher Zugriff auf die Daten aller beteiligten Komponenten hat, erfasst dabei alle wichtigen Verbrauchsdaten der verwendeten Druckmaschine(n) 10, sowie die Lagerdaten. Im Falle von Lack als fluidem Verbrauchsmaterial, wird Lack im Lackwerk 9 der Druckmaschine 10 eingesetzt. Ist der Vorrat erschöpft muss ein weiteres Lackgebinde 8 aus dem Lager 7 organisiert werden, um den Vorrat des Lackwerks 9 entsprechend wieder aufzufüllen. Der Lackverbrauch der Druckmaschine 10 hängt dabei von verschiedenen Druckjobparametern ab, womit auch die Maschinenparameter der zu verwendenden Druckmaschine 10 gemeint sind.

Wesentliche Druckjobparameter sind z.B. die Sujetbelegung in Form der prozentualen Flächendeckung, das Format, das Drucksubstrat und hier besonders die Oberflächenbeschaffenheit, das Wegschlagverhalten und das Absorptionsverhalten, die Lack-/Farb-/Feuchtmittelsorte bzgl. Hersteller, Typ, Name, Charge, die Pressung, bei Lack die Lackplatte, bzw. bei Farbe die Druckplatte bzgl. Hersteller, Typ, Name, Charge, die verwendete Rasterwalze z.B. in Bezug auf die Näpfchengröße oder die Temperatur im Lack-/Farb-/Feuchtwerk, sowie die Druckgeschwindigkeit.

Notwendigen Daten aus der Lagerhaltung beziehen sich vor allem auf den Entnahmezeitpunkt und -menge für neue Lackgebinde 8, bzw. Farb- oder Feuchtmittelbehälter und die entsprechende Lack-, Farb- oder Feuchtmittelsorte die auch hier für eine korrekte Zuordnung Daten über den Hersteller, Typ, Name, Charge.

Ausgehend von der Annahme, dass immer dann ein neues Gebinde entnommen wird, wenn das alte Gebinde 8 leer ist, lässt sich somit über einen längeren Zeitraum der gesamte Lackverbrauch ermitteln. Eventuelle Rest- oder Verlustmengen sind damit inbegriffen, was aber gewollt ist, da der tatsächliche Lackverbrauch ermittelt werden soll.

Am anschaulichsten ist die Modellbildung wenn man die Summe des verbrauchten Lacks, z.B. über ein Jahr, durch die Summe der bedruckten Fläche in diesem Jahr teilt. Dies ist der mittlere Lackverbrauch pro bedruckter Fläche. Dieser würde alle Lackmengen beinhalten: der Lack auf dem Papier, Lackreste in der Maschine 10, Lackreste im Gebinde 8, weggewaschene Lackmengen, etc. Gleiches gilt auch für Farbe und Feuchtmittel, jedoch wird der Einfachkeit halber im Weiteren nur vom Lack gesprochen.

Dieses einfache Gedankenmodell wird durch Anwendung von Big-Data-Lösungen schrittweise detailliert und verbessert, so dass am Ende ein rechnergestütztes Modell entsteht, welches abhängig von den oben genannten Parametern den Lackverbrauch für eine einzelne Druckmaschine 10 möglichst genau abbildet.

Im Detail wird dabei erfindungsgemäß von einem Rechner 6 ein mathematisches Regressionsmodell angepasst, welches die Zusammenhänge zwischen den Druckjobparametern mit dem realen Lackverbrauch koppelt. Eingangsgrößen sind die Druckjobparameter, welche kontinuierlicher (Sujetbelegung, Joblänge, Temperatur) oder kategorieller (Rasterwalzenzyp) Natur sein können. Ausgangsgröße ist die Lagerentnahme des Lacks, bevorzugt in Liter (L). Alternativ kann in einer weiteren erfindungsgemäßen Ausführungsvariante bei Vorliegen ausreichender Daten vom Rechner 6 auch ein Machine-Learning-Algorithmus, insbesondere in Form einer Support Vector Machine, verwendet werden.

Eine Grundvoraussetzung für die Erstellung und Anwendung des Verbrauchsmodells ist der Zugriff auf die Daten der Lagerhaltung sowie der Druckjobparameter über einen großen Zeitraum und für einen großen Maschinenpark, sodass eine geeignet große Datenbasis (Big-Data) zur Verfügung steht.

Mit einem solchen Modell kann der Rechner 6 dann zum Einen die Lagerhaltung optimieren. Darüber hinaus ist die Lackverbrauchsvorhersage von Bedeutung, um Leckagen zu ermitteln, Pumpenüberwachung durchführen zu können und für zukünftige Entwicklung Pumpenauslastung und -Auslegung zu verbessern.

Außerdem kann das Wissen herangezogen werden, um die Optimierung von Wasch-Zyklen und Lackwechsel in der Druckmaschine 10 durchzuführen, sowie die Eintrocknung und Ansammlung von Lackresten im Lackwerk 9 zu vermeiden.

Im Folgenden wird das erfindungsgemäße Verfahren in seiner bevorzugten Ausführungsvariante anhand eines fiktiven Beispiels mit entsprechenden Daten näher erläutert.

Bzgl. der Daten, bzw. Voraussetzungen aus denen das Vorhersagemodell werden für das Beispiel folgende Annahmen getroffen:
1. Es stehen drei verschiedene Rasterwalzentypen mit unterschiedlicher Lackverbrauchsmenge zur Verfügung, welche eine unterschiedliche Temperaturabhängigkeit aufweisen.
2. Es wird von einer unbekannten Leckagemenge ausgegangen.
3. Es stehen 100000 Druckjobs mit Auflagenlängen von 100 bis 10000 mit bekanntem Datum/Uhrzeit zur Bearbeitung an.
4. Für die Abarbeitung dieser Druckjobs werden vom erstellten Modell 6000 Lackentnahmen aus dem Lager mit bekanntem Datum/Uhrzeit prognostiziert

Die Daten werden vom Rechner in einer Datenbank verwaltet, wobei die Daten bevorzugt folgendermaßen folgender maßen organisiert sind:

### Druckjob-/Maschinendaten:

| Date | Time | Length | Coverage | Temperature | RW |
|---|---|---|---|---|---|
| 08.03.2019 | 11:33:43 | 5082 | 0.83734 | 30.534013 | V1 |
| 08.03.2019 | 11:48:07 | 5411 | 0.153003 | 36.07285 | V1 |
| 08.03.2019 | 12:02:31 | 9182 | 0.557279 | 33.62523 | V1 |
| 08.03.2019 | 12:16:55 | 3269 | 0.405539 | 30.160181 | V3 |
| 08.03.2019 | 12:31:19 | 8841 | 0.862206 | 22.781552 | V1 |
| 08.03.2019 | 12:45:43 | 7104 | 0.496435 | 25.569903 | V2 |
| 08.03.2019 | 13:00:07 | 5634 | 0.441237 | 31.200093 | V2 |
| 08.03.2019 | 13:14:31 | 5983 | 0.669666 | 33.003459 | V2 |
| 08.03.2019 | 13:28:55 | 814 | 0.848586 | 29.058173 | V2 |
| 08.03.2019 | 13:43:19 | 9006 | 0.548472 | 33.48739 | V1 |

### Lagerdaten bzgl. Lack:

| Date | Time |
|---|---|
| 08.03.2019 | 11:33:43 |
| 08.03.2019 | 13:28:55 |
| 08.03.2019 | 16:43:19 |
| 08.03.2019 | 19:11:10 |
| 08.03.2019 | 22:43:59 |

Die Lackdaten werden vom Rechner 6 so aufbereitet, dass sich ein realistischer Verbrauch aus den Daten ermitteln lässt. Immer wenn das Lackvolumen im Tank einen Wert von 251 unterschreitet, wird eine "Auffüllung" getriggert. Eingangswert für die Regression oder den Machine-Learning-Algorithmus ist die Zeit zwischen zwei Lack-Auffüllungen.

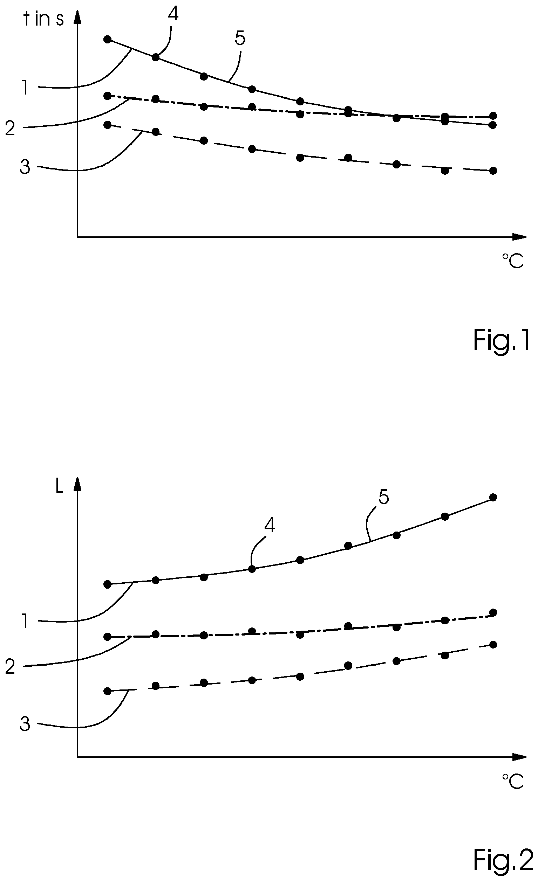

Für diesen Fall ist das Verbrauchsvorhersagemodell sowohl in Form einer klassischen linearen Regression, als auch in Form eines selbstlernenden Algorithmus, wie z.B. einer Support Vector Machine oder eines künstlichen neuronalen Netzes, gut in der Lage, aus diesen Daten auf den realen Lackverbrauch zu schließen. Die drei hinterlegten Geraden in Figur 1 sind Verbrauchskurven 1, 2, 3 für die drei verschiedenen Rasterwalzen-Typen. Die Geraden selber geben dabei die realen Verbrauchswerte 4 ohne Leckage- und Verlustmengen an. Die Datenpunkte in den Verbrauchskurven 1, 2, 3 sind die vom Modell gelieferten modellierte Verbrauchswerte 5, d.h. die Lack-Auffüllzeiten. Sowohl die realen Verbrauchswerte 4, als auch die modellierten Verbrauchswerte 5 sind im vorliegenden Beispiel abhängig von der Temperatur im Lackwerk. Die Temperaturbereiche liegen hier gemäß der verwendeten Werte im Bereich 20 bis 40 °C. Bei anderen Daten in anderen Ausführungsformen können natürlich entsprechend andere Abhängigkeiten bestehen.

In Figur 2 wird der gleiche Sachverhalt noch einmal in Form des Lackverbrauchs in Litern abhängig von der Temperatur dargestellt.

### Bezugszeichenliste

- 1: Verbrauchskurve Zeit / Temperatur für erste Rasterwalze
- 2: Verbrauchskurve Zeit / Temperatur für zweite Rasterwalze
- 3: Verbrauchskurve Zeit / Temperatur für dritte Rasterwalze
- 4: reale Verbrauchswerte
- 5: modellierte Verbrauchswerte
- 6: Rechner
- 7: Lager
- 8: Lackwerkgebinde
- 9: Lackwerk einer Druckmaschine
- 10: Druckmaschine

## Patentansprüche

1. Verfahren zum Betrieb einer Bedruckstoffe verarbeitenden Maschine (10) durch einen Rechner (6), die folgenden Schritte umfassend:
• Erfassung von Druckauftragsparametern von Druckaufträgen für die Bedruckstoffe verarbeitende Maschine (10) und von Maschinenparametern durch den Rechner (6)
• Auswertung der erfassten Parameter zur Ermittlung des Maschinenzustandes durch den Rechner (6)
• Anforderung und Bereitstellung von fluiden Verbrauchsmaterialien (8) zur Optimierung des Betriebs der Maschine (10) auf Basis des ermittelten Maschinenzustandes durch den Rechner (6)
• Durchführen von auf Basis des ermittelten Maschinenzustandes optimierten Wartungsmaßnahmen an der Maschine (10) durch den Rechner (6),
**dadurch gekennzeichnet, dass** der Rechner (6) zur Anforderung und Bereitstellung von fluiden Verbrauchsmaterialien (8) auf Basis des ermittelten Maschinenzustandes eine Verbrauchsvorhersage der fluiden Verbrauchsmaterialien (8) mittels eines Regressionsmodells durchführt,
wobei es sich bei den fluiden Verbrauchsmaterialien (8) um Lack für ein Lackwerk (9), Farbe für ein Druckwerk oder Feuchtmittel für ein Feuchtwerk der Bedruckstoffe verarbeitenden Maschine (10) handelt und
wobei der Rechner (6) für das Regressionsmodell zur Verbrauchsvorhersage der fluiden Verbrauchsmaterialien (8) ein lineares Regressionsmodell oder ein selbstlernendes Modell verwendet.

2. Verfahren nach Anspruch 1,
**dadurch gekennzeichnet,**
**dass** der Rechner (6) für das Regressionsmodell zur Verbrauchsvorhersage der fluiden Verbrauchsmaterialien (8) ein selbstlernendes Modell mit einer Support Vector Machine verwendet.

3. Verfahren nach einem der vorherigen Ansprüche,
**dadurch gekennzeichnet,**
**dass** es sich bei den Druckauftrags- und Maschinenparametern um Parameter wie die Flächendeckung des Druckauftrages, die entsprechende Druckzeit, die Auflagenlänge, die Temperatur in der Bedruckstoffe verarbeitenden Maschine oder den verwendeten Rasterwalzentyp handelt.

4. Verfahren nach einem der vorherigen Ansprüche,
**dadurch gekennzeichnet,**
**dass** die optimierten Wartungsmaßnahmen die Durchführung von Waschzyklen und Lack-, bzw. Farbwechsel in der Maschine (10) umfasst, um Eintrocknung und Ansammlung von Lack- oder Farbresten zu vermeiden.

5. Verfahren nach einem der vorherigen Ansprüche,
**dadurch gekennzeichnet,**
**dass** die Ermittlung des Maschinenzustandes durch den Rechner (6) auch die Untersuchung auf eine mögliche Leckage, sowie eine Pumpenüberwachung umfasst.

## Claims

1. Method for operating a machine that processes printing materials (10) via a computer (6), which comprises the following steps:
• Acquisition of print job parameters for print jobs for the machine that processes printing materials (10) and of machine parameters by the computer (6)
• Evaluation of the acquired parameters to determine the machine status by the computer (6)
• Request and provision of liquid consumables (8) for optimizing operation of the machine (10) based on the machine status determined by the computer (6)
• The computer (6) carries out optimized maintenance measures on the machine (10) on the basis of the determined machine state,
**characterized in that** the computer (6) carries out a consumption prediction of the liquid consumables (8) by means of a regression model for requesting and providing liquid consumables (8) on the basis of the determined machine state,
wherein the fluid consumables (8) are varnish for a coating unit (9), ink for a printing unit or dampening solution for a dampening unit of the machine (10) that processes the printing materials, and
wherein the computer (6) uses a linear regression model or a self-learning model for the regression model for predicting the consumption of the liquid consumables (8).

2. Method according to claim 1,
**characterized in that**
the computer (6) uses a self-learning model with a support vector machine for the regression model for predicting the consumption of the liquid consumables (8).

3. Method according to one of the preceding claims,
**characterized in that**
the print job and machine parameters are parameters such as the area coverage of the print job, the corresponding printing time, the print run length, the temperature in the machine that processes the printing materials or the type of screen roller used.

4. Method according to one of the preceding claims,
**characterized in that**
the optimized maintenance measures comprise carrying out washing cycles and varnish or ink changes in the machine (10) in order to avoid drying and accumulation of varnish or ink residues.

5. Method according to one of the preceding claims,
**characterized in that**
the determination of the machine status by the computer (6) also comprises the examination for a possible leakage, as well as pump monitoring.

## Revendications

1. Procédé d'exploitation d'une machine de traitement de supports d'impression (10) par un ordinateur (6), comprenant les étapes suivantes :
• saisie par l'ordinateur (6) de paramètres de travaux d'impression pour la machine de traitement de supports d'impression (10) et de paramètres de la machine
• évaluation par l'ordinateur (6) des paramètres saisis pour déterminer l'état de la machine
• demande et mise à disposition de consommables fluides (8) en vue d'optimiser le fonctionnement de la machine (10) sur la base de l'état de la machine déterminé par l'ordinateur (6)
• exécution par l'ordinateur (6) de mesures de maintenance optimisées sur la machine (10) sur la base de l'état déterminé de la machine,
**caractérisé en ce que** l'ordinateur (6) destiné à la demande et à la mise à disposition de consommables fluides (8) effectue, sur la base de l'état déterminé de la machine, une prévision de consommation des consommables fluides (8) au moyen d'un modèle de régression,
pour lequel il s'agit, pour les consommables fluides (8), de vernis pour un dispositif de vernissage (9), d'encre pour un groupe d'impression ou de solution de mouillage pour un dispositif de mouillage de la machine (10) traitant des supports d'impression et
pour lequel l'ordinateur (6) utilise un modèle de régression linéaire ou un modèle auto-adaptatif pour le modèle de régression destiné à la prévision de la consommation des consommables fluides (8).

2. Procédé selon la revendication 1,
**caractérisé en ce**
**que** l'ordinateur (6) utilise un modèle auto-adaptatif avec une machine à vecteurs de support pour le modèle de régression destiné à la prévision de la consommation des consommables fluides (8).

3. Procédé selon l'une des revendications précédentes,
**caractérisé en ce**
**que** les paramètres du travail d'impression et de la machine sont des paramètres tels que la couverture superficielle du travail d'impression, le temps d'impression correspondant, la longueur du tirage, la température dans la machine traitant les supports d'impression ou le type de rouleau tramé utilisé.

4. Procédé selon l'une des revendications précédentes,
**caractérisé en ce**
**que** les mesures de maintenance optimisées comprennent la réalisation de cycles de lavage et de changement de vernis ou d'encre dans la machine (10), afin d'éviter le séchage et l'accumulation de résidus de vernis ou d'encre.

5. Procédé selon l'une des revendications précédentes,
**caractérisé en ce**
**que** la détermination de l'état de la machine par l'ordinateur (6) inclut également l'examen d'une fuite éventuelle, ainsi qu'une surveillance de la pompe.
